# EUROPÄISCHE PATENTSCHRIFT

(11) **EP 1 509 308 B1**
(45) Veröffentlichungstag und Bekanntmachung des Hinweises auf die Patenterteilung: **20.09.2006**
(21) Anmeldenummer: 03727474.3
(22) Anmeldetag: 14.05.2003
(51) Int. Cl.: B01D 35/31

(54) **VORRICHTUNG ZUM FILTERN VON UNTER EINEM HOHEN DRUCK GEFÖRDERTEN FLUIDEN**
DEVICE FOR FILTERING FLUIDS THAT ARE CONVEYED UNDER A HIGH PRESSURE
DISPOSITIF DE FILTRATION DE FLUIDES ACHEMINES SOUS HAUTE PRESSION

(30) Priorität: 04.06.2002 DE 10224634
(43) Veröffentlichungstag der Anmeldung: 02.03.2005
(73) Patentinhaber: Kamat-Pumpen GmbH + Co. KG, 58431 Witten-Annen (DE)
(72) Erfinder: WOLF, Wilhelm, Paul, 45883 Gelsenkirchen (DE); SPRAKEL, Jan, G., 42929 Wermelskirchen (DE)
(74) Vertreter: Simons, Johannes
(86) Internationale Anmeldenummer: PCT/EP2003/005032
(87) Internationale Veröffentlichungsnummer: WO 2003/101583

(56) Entgegenhaltungen:
- DE-A- 10 224 634
- FR-A- 2 799 259
- FR-E- 91 999
- US-A- 2 801 751
- US-A- 3 307 854
- US-A- 5 609 757
- DATABASE WPI Week 199510, 15. August 1993 (1993-08-15) Derwent Publications Ltd., London, GB; AN 1995-073520 XP002252218 POTATOV VLADIMIR: "filter for purification of high pressure gases" -& SU 1 834 688 A (UZGAZTEKHNIKA), 15. August 1993 (1993-08-15)

## Beschreibung

Die Erfindung betrifft eine Vorrichtung zum Filtern von unter einem hohen Druck geförderten Fluiden. Derartige Filtervorrichtungen werden beispielsweise im Bereich der Verfahrenstechnik, wie beispielsweise der Kunststoffproduktion oder der Biotechnologie, benötigt, um bei der Produktion anfallende Flüssigkeiten zu reinigen. Dazu muss sichergestellt sein, dass der Filterraum zu jedem Zeitpunkt des Betriebes jederzeit dicht gegenüber der Umgebung abgeschottet bleibt.

Konventionell ausgebildete, in der Praxis für Hochdruckanwendungen von bis zu 4300 bar eingesetzte Filtervorrichtungen, wie sie beispielsweise von der Hochdrucktechnik HOTEC GmbH angeboten werden, weisen in der Regel ein rohrförmig ausgebildetes Gehäuse auf, das in die Hochdruckleitung koaxial integriert ist. Diese Filter sind mit einem membranförmigen Filterelement ausgestattet, das aufgrund seiner kleinen Filterfläche nur geringe Schmutzmengen aufnehmen kann. Hinzukommt, dass das Filterelement bei größeren, unter hohem Druck stehenden Fluidströmen zu extrem hohen Druckverlusten führt. Filter, die in der Lage sind, größere Schmutzmengen bei geringem Druckverlust aufzunehmen, stehen üblicherweise nur bis zu Drücken von mittlerer, maximal 500 bar betragender Höhe zur Verfügung.

Bei den bekannten Filtervorrichtungen ist bei den Hochdruckversionen eine ausreichende Druckfestigkeit nur bei zu geringer Filterfläche gegeben. Bei den Vorrichtungen für mittlere Drücke bis 500 bar dagegen ist eine ausreichende Filterfläche bei zu geringer Druckfestigkeit gegeben. Ein weiterer Nachteil der bekannten Vorrichtungen, wie in US 2 801 751 dargestellt, für den Hochdruckeinsatz besteht darin, dass sie für Wartungszwecke komplett von den Rohranschlüssen gelöst werden müssen.

Die Aufgabe der Erfindung bestand daher darin, eine einfach zu wartende Vorrichtung zu schaffen, die einerseits höchsten Druckbelastungen standhält und andererseits eine gegenüber herkömmlichen Hochdruckfiltern deutlich vergrößerte Filterfläche aufweist.

Diese Aufgabe wird durch eine Vorrichtung zum Filtern von unter einem hohen Druck geförderten Fluiden gelöst, die mit einer Einströmöffnung, einer Abströmöffnung und einem einen Filterraum umgebenden metallischen Gehäuse ausgestattet ist, das eine Wartungsöffnung aufweist, die durch einen ebenfalls metallischen Deckel verschlossen ist, der unter einer Anpresskraft auf einem die Wartungsöffnung umgebenden Randabschnitt in unmittelbarem Kontakt mit dem Metall des Gehäuses sitzt ist, wobei die dem Deckel zugeordnete Randfläche des Randabschnitts zwischen ihrer der Öffnung zugeordneten inneren Begrenzungskante und ihrer äußeren Begrenzungskante derart schräg verläuft, dass die Randfläche mit der an sie angrenzenden Innenfläche und Außenfläche des Randabschnitts jeweils einen von 90 ° abweichenden Winkel einschließt und die Kontaktfläche zwischen dem Deckel und dem Rand auf einen Bruchteil der Randfläche beschränkt ist, und wobei in dem Filterraum ein von dem Fluid auf seinem Weg von der Einströmöffnung zu der Abströmöffnung durchströmtes Filterelement angeordnet ist.

Eine erfindungsgemäße Vorrichtung weist ein Gehäuse auf, das mit einer Wartungsöffnung ausgestattet ist. Diese Wartungsöffnung ist so gestaltet, dass der von dem Gehäuse umgebene Filterraum über sie zugänglich ist. Um dabei die Dichtheit des Gehäuses auch unter hohen Drücken zu gewährleisten, ist die Randfläche, auf der der Deckel sitzt, so angeschrägt, dass es beim Aufsetzen des Deckels zwischen dem Deckel und dem Rand zu einer im wesentlichen linienförmigen Berührung kommt. Wenn anschließend der Deckel auf den Rand gepresst wird, kommt es zu einer hohen Kraftkonzentration im Berührungsbereich. Infolgedessen kommt es im Berührungsbereich zu Verformungen des Metalls, welche dazu führen, dass sich die Form der Randfläche perfekt an die Form der mit ihr in Kontakt stehenden Deckelfläche anpasst. Auf diese Weise ist eine metallische Abdichtung geschaffen, die auch unter hohem Druck über eine lange Betriebsdauer sicher das Austreten von Fluid aus dem Filtergehäuse verhindert.

Ein besonderer Vorteil der erfindungsgemäßen Abdichtung der Wartungsöffnung besteht darin, dass offene Fugen vermieden werden, in denen sich Verschmutzungen absetzen können. Auf diese Weise erfüllt die erfindungsgemäße Vorrichtung auch strengste Hygieneanforderungen, ohne dass dazu aufwendige konstruktive Maßnahmen erforderlich sind.

Bevorzugt ist das Filterelement als Filterkörper ausgebildet, der auf einer der den Filterraum umgrenzenden Wände sitzt und im Bereich mindestens einer seiner Umfangsflächen von dem Fluid durchströmt wird. Auf diese Weise lässt sich die von dem Fluid durchströmte Filterfläche und damit der Durchsatz durch den Filter vergrößern. Insbesondere vorteilhaft ist es dabei, wenn das Filterelement mit seiner Dichtfläche die Abströmöffnung umgibt. Bei dieser Anordnung kann der Filterkörper von der Wand, in die die Abströmöffnung eingeformt ist, frei in den Filterraum vorstehen. Auf diese Weise steht ein Maximum an Filterfläche zur Verfügung, die von dem Fluid durchströmt werden kann. Dazu kann der Filterkörper eine zylindrische Form aufweisen, wie sie von konventionellen Filterpatronen an sich bekannt ist.

Die Montage des Filterkörpers kann dadurch erleichtert werden, dass das Filterelement mit einer aus dem Filterraum auf die Dichtfläche wirkenden elastischen Kraft belastet ist. Die elastische, beispielsweise durch eine Feder erzeugte Kraft, dient dazu, das Filterelement zu halten, bis seine Dichtfläche von dem druckbeaufschlagten Fluid selbsttätig gegen die zugeordnete Wand des Gehäuses gedrückt wird.

Eine weitere vorteilhafte Ausgestaltung der Erfindung ist dadurch gekennzeichnet, dass das Gehäuse rohrförmig ausgebildet ist. Diese Variante der Erfindung ermöglicht nicht nur eine besonders einfache Gestaltung einer erfindungsgemäßen Vorrichtung, sondern es lässt sich in ebenso einfacher Weise so gestalten, dass es zwei Wartungsöffnungen aufweist. Dabei sollte jede Wartungsöffnung von einem in unmittelbarem Kontakt mit dem Metall des Gehäuses stehenden, jeweils auf einen Randabschnitt gepressten Deckel verschlossen sein und die den Deckeln jeweils zugeordnete Randfläche der Randabschnitte zwischen ihrer der Öffnung zugeordneten inneren Begrenzungskante und ihrer äußeren Begrenzungskante derart schräg verlaufen, dass die jeweilige Randfläche mit der an sie angrenzenden Innenfläche und Außenfläche des Randabschnitts jeweils einen von 90 ° abweichenden Winkel einschließt. Die für den dichten Sitz der Deckel erforderliche Anpresskraft kann dabei dadurch erzeugt werden, dass die Deckel gegeneinander verspannt sind. Zu diesem Zweck können nach Art von Dehnschrauben wirkende Spannschrauben oder -bolzen eingesetzt werden, die aufgrund ihrer Dehnbarkeit in der Lage sind, kurzfristig auftretende Spitzenbelastungen sicher aufzunehmen. Durch die Verwendung derartiger dehnfähiger Spannschrauben oder -bolzen kann daher auch unter ungünstigen Bedingungen über eine lange Betriebsdauer eine dauerhaft sichere Dichtheit der erfindungsgemäßen Vorrichtung gewährleistet werden.

Eine weitere Vereinfachung der Ausgestaltung einer erfindungsgemäßen Vorrichtung lässt sich dadurch erreichen, dass die Einströmöffnung in dem einen Deckel und die Abströmöffnung in dem anderen Deckel eingeformt ist.

Nachfolgend wird die Erfindung anhand einer ein Ausführungsbeispiel darstellenden Zeichnung näher erläutert. Es zeigen:

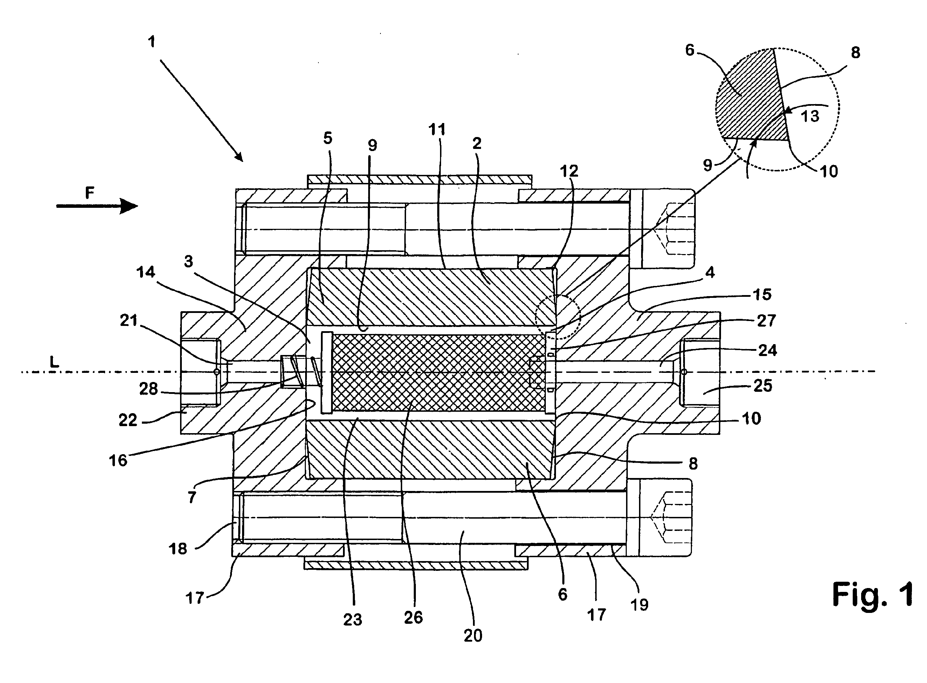

- Fig. 1: eine Vorrichtung zum Filtern von bei der verfahrenstechnischen Produktion anfallenden Flüssigkeiten im Längsschnitt;

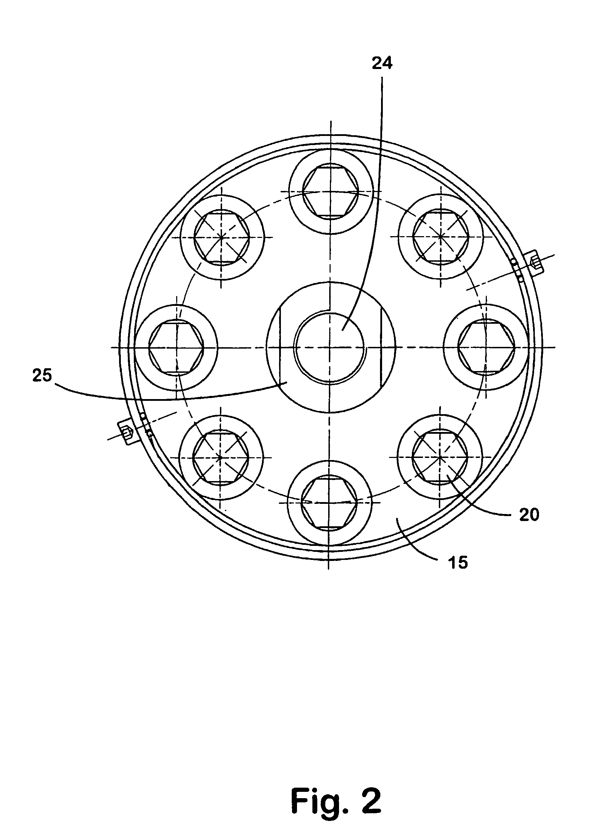

- Fig. 2: die in Fig. 1 dargestellte Vorrichtung in einer stirnseitigen Ansicht;
- Fig. 3: eine alternative Ausgestaltung der in Fig. 1 dargestellten Vorrichtung.

Die Vorrichtung 1 umfasst ein aus einem geeigneten Werkstoff, wie beispielsweise Stahl oder einem anderen Metall, Verbundwerkstoff oder Keramik, gefertigtes, rohrförmiges Gehäuse 2, welches an seinen beiden Stirnseiten jeweils eine Wartungsöffnung 3,4 aufweist. Der Durchmesser der Wartungsöffnungen 3,4 entspricht dabei dem Rohrdurchmesser des Gehäuses 2. Der die Wartungsöffnungen 3,4 jeweils umgebende Randabschnitt 5,6 des Gehäuses 2 weist jeweils eine stirnseitig an dem Gehäuse 2 ausgebildete Randfläche 7,8 auf. Diese Randfläche 7,8 ist jeweils ausgehend von ihrer der Innenfläche 9 des Gehäuses 2 zugeordneten Randkante 10 in Richtung ihrer äußeren, der Außenfläche 11 des Gehäuses 2 zugeordneten Randkante 12 abfallend so angeschrägt, dass zwischen der jeweiligen Randfläche 7,8 und der Innenfläche 9 des Gehäuses 2 ein spitzer Winkel 13 eingeschlossen ist.

Auf die Randflächen 7,8 ist jeweils ein Deckel 14,15 aufgesetzt. Die den Randflächen 7,8 zugeordnete Deckelfläche 16 ist eben ausgebildet, so dass es im Bereich der inneren Randkante 10 der Randflächen 7,8 zu einer im wesentlichen linienförmigen Berührung zwischen der jeweiligen Deckelfläche 16 und den Randflächen 7,8 kommt. Mit ihrem jeweiligen seitlichen Randabschnitt 17 umgreifen die Deckel 14,15 dabei im Bereich der Randabschnitte 5,6 die Außenfläche 11 des Gehäuses 2 so, dass sie zentriert auf den Stirnseiten des Gehäuses 2 gehalten sind.

In den in Fließrichtung F zuerst passierten Deckel 14 sind in regelmäßigen Winkelabständen um die Längsachse L der Vorrichtung 1 verteilt Gewindebohrungen 18 eingeformt, die sich achsparallel zur Längsachse L erstrecken. In den gegenüberliegend angeordneten Deckel 15 sind in gleicher Anordnung dagegen Durchgangsbohrungen 19 eingebracht, die fluchtend zu den Gewindebohrungen 18 ausgerichtet sind. Durch die Durchgangsbohrungen 19 sind Spannschrauben 20 geführt, die mit ihrem Schraubenkopf auf der von dem Deckel 14 abgewandten Außenseite des Deckels 15 abgestützt und mit ihrem Gewindeabschnitt in die jeweils zugeordnete Gewindebohrung 18 eingeschraubt sind.

Auf diese Weise lassen sich die Deckel 14,15 so gegeneinander verspannen, dass sie mit hoher Anpresskraft gegen die Randflächen 7,8 drücken. Aufgrund dessen, dass die Berührungsfläche zwischen den Deckeln 14,15 und der Randflächen 7,8 im Wesentlichen auf eine Linie beschränkt ist, kommt es zu einer hohen Kraftkonzentration in diesem Berührungsbereich. Infolgedessen verformt sich das Metall der Randabschnitte 5,6 und der Deckel 14,15 im Berührungsbereich so, dass eine dauerhaft dichte, hohen Druckbelastungen bis 1500 bar sicher standhaltende metallische Abdichtung zwischen dem Gehäuse 2 und den Deckeln 14,15 geschaffen ist.

In den in Fließrichtung F zuerst passierten Deckel 14 ist eine sich koaxial zur Längsachse L erstreckende Einströmöffnung 21 eingeformt, die von einem auf der Außenseite des Deckels 14 angeformten Verbindungsstutzen 22 in den vom Gehäuse 2 umgebenen zylindrischen Filterraum 23 führt. Im gegenüberliegenden Deckel 15 ist fluchtend zur Einströmöffnung 21 eine sich ebenfalls koaxial zur Längsachse L erstreckende Abströmöffnung 24 ausgebildet, die aus dem Filterraum 23 zu einem auf der Außenseite des Deckels 15 ausgebildeten Verbindungsstutzen 25 führt.

In dem zylindrischen Filterraum 23 sitzt ein ebenfalls zylindrischer Filterkörper 26, dessen Durchmesser kleiner ist als der Durchmesser des Filterraums 23. Mit seiner dem Deckel 15 zugeordneten stirnseitigen Dichtfläche 27 liegt der Filterkörper 25 dicht an der Deckelfläche 16 des Deckels 15 an und umgibt die Abströmöffnung 24 so, dass die nicht dargestellte Abströmöffnung des Filterkörpers 23 direkt in die Abströmöffnung 24 der Vorrichtung 1 übergeht. Die axiale Erstreckung des Filterkörpers 26 ist so bemessen, dass seine dem Deckel 14 zugeordnete Stirnwand mit Abstand zur Deckefläche des Deckels 14 angeordnet ist. Eine in einer Einsenkung des Deckels 14 sitzende Feder 28 übt dabei eine elastische Kraft auf den Filterkörper 26 aus, durch welche der Filterkörper 26 mit seiner Dichtfläche 27 gegen die Deckelfläche 16 des Deckels 15 gedrückt wird. Die Umfangsfläche des Filterkörpers 26 ist als Filtermembran ausgebildet.

Im fertig montierten Zustand sind hier nicht dargestellte Rohrleitungen in die Verbindungsstutzen 22, 25 geschraubt. Sobald das zu filternde Fluid in den Filterraum 23 einströmt, wird der Filterkörper 26 von dem Fluid mit seiner Dichtfläche 27 gegen die Deckelfläche 16 des Deckels 15 gepresst. Das Fluid umströmt dabei den Filterkörper 26 und durchtritt die auf dessen Umfangsfläche ausgebildete Filtermembran, bevor es über die Abströmbohrung 24 aus der Vorrichtung 1 strömt.

Muss der Filterkörper 26 gewartet werden, so werden dazu die Spannschrauben 20 gelöst. Die Vorrichtung 1 kann dann problemlos in ihre Einzelteile zerlegt, gewartet und in gleicher Weise wieder zusammengebaut werden.

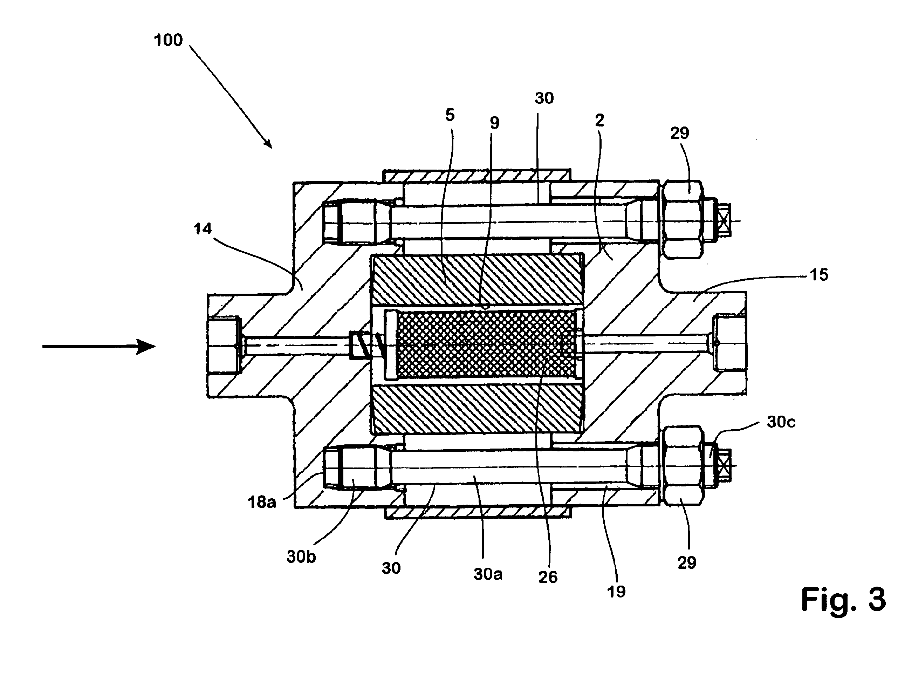

Die in Fig. 3 dargestellte Vorrichtung 100 unterscheidet sich von der Vorrichtung 1 nur insoweit, als bei der Vorrichtung 100 anstelle der bei der Vorrichtung 1 eingesetzten Spannschrauben 20 Spannbolzen 30 eingesetzt wurden, die zur Verbesserung ihres Dehnungsverhaltens einen Schaftabschnitt 30a mit gegenüber den anderen Abschnitten der Spannbolzen 30 vermindertem Querschnitt aufweisen. An ihren Enden weisen die Spannbolzen 30 jeweils einen Gewindeabschnitt 30b,30c auf.

Der dem Deckel 14 zugeordnete Gewindeabschnitt 30b ist in eine als Sackloch in den Deckel 14 eingeformte Gewindebohrung 18a eingeschraubt, während der andere Gewindeabschnitt durch die Durchgangsbohrung 19 des anderen Deckels 15 geführt ist und mindestens teilweise über die von dem Deckel 14 abgewandte Seite des Deckels 15 hinaussteht. Auf diesen hinausstehenden Abschnitt des Gewindeabschnitts 30c ist jeweils eine Mutter 29 geschraubt, durch die die Deckel 14 und 15 gegeneinander verspannt sind. Der Vorteil der Verwendung von als Dehnschrauben wirkenden Spannbolzen 30 besteht dabei darin, dass die so gebildete Verspannung elastischer auf Belastungsspitzen reagieren kann, so dass im Ergebnis höhere Presskräfte aufgebracht werden können, die eine höhere Sicherheit der Abdichtung gewährleisten.

### BEZUGSZEICHEN

- 1: Vorrichtung
- 2: Gehäuse
- 3,4: Wartungsöffnungen
- 5,6: Randabschnitte
- 7,8: Randflächen
- 9: Innenfläche des Gehäuses 2
- 10: innere Randkante der Randflächen 7,8
- 11: Außenfläche des Gehäuses 2
- 12: äußere Randkante der Randflächen 7,8
- 13: Winkel zwischen der Innenfläche und der Randfläche
- 14,15: Deckel
- 16: Deckelfläche
- 17: Randabschnitt .
- 18,18a: Gewindebohrungen
- 19: Durchgangsbohrungen
- 20: Spannschrauben
- 21: Einströmöffnung
- 22: Verbindungsstutzen
- 23: Filterraum
- 24: Abströmöffnung
- 25: Verbindungsstutzen
- 26: Filterkörper
- 27: Dichtfläche
- 28: Feder
- 29: Muttern
- 30: Spannbolzen
- 30a: Schaftabschnitt der Spannbolzen 30
- 30b,30c: Gewindeabschnitte der Spannbolzen 30

- F: Fließrichtung
- L: Längsachse der Vorrichtung 1

## Patentansprüche

1. Vorrichtung zum Filtern von unter einem hohen Druck geförderten Fluiden, mit einer Einströmöffnung (21), einer Abströmöffnung (24) und einem einen Filterraum (23) umgebenden metallischen Gehäuse (2), das eine Wartungsöffnung (3,4) aufweist, die durch einen ebenfalls metallischen Deckel (14,15) verschlossen ist, der unter einer Anpresskraft auf einem die Wartungsöffnung (3,4) umgebenden Randabschnitt (5,6) in unmittelbarem Kontakt mit dem Metall des Gehäuses (2) sitzt, wobei die dem Deckel (14,15) zugeordnete Randfläche (7,8) des Randabschnitts (5,6) zwischen ihrer der Wartungsöffnung (3,4) zugeordneten inneren Begrenzungskante (10) und ihrer äußeren Begrenzungskante (12) derart schräg verläuft, dass die Randfläche (7,8) mit der an sie angrenzenden Innenfläche (9) und Außenfläche (11) des Randabschnitts (5,6) jeweils einen von 90 ° abweichenden Winkel (13) einschließt und die Kontaktfläche zwischen dem Deckel (14,15) und dem Randabschnitt (5,6) auf einen Bruchteil der Randfläche (7,8) beschränkt ist, und wobei in dem Filterraum (23) ein von dem Fluid auf seinem Weg von der Einströmöffnung (21) zu der Abströmöffnung (24) durchströmtes Filterelement (26) angeordnet ist.

2. Vorrichtung nach Anspruch 1, **dadurch gekennzeichnet, dass** das Filterelement als Filterkörper (26) ausgebildet ist, der auf einer der den Filterraum (23) umgrenzenden Wände sitzt und im Bereich mindestens einer seiner Umfangsflächen von dem Fluid durchströmbar ist.

3. Vorrichtung nach Anspruch 2, **dadurch gekennzeichnet, dass** das Filterelement (26) mit seiner Dichtfläche (27) die Abströmöffnung (24) umgibt.

4. Vorrichtung nach Anspruch 2 oder 3, **dadurch gekennzeichnet, dass** das Filterelement (26) mit einer aus dem Filterraum (23) auf die Dichtfläche (27) wirkenden elastischen Kraft belastet ist.

5. Vorrichtung nach einem der Ansprüche 2 bis 4, **dadurch gekennzeichnet, dass** das Filterelement (26) eine zylindrische Form aufweist.

6. Vorrichtung nach Anspruch 5, **dadurch gekennzeichnet, dass** die Wartungsöffnungen (3,4) an den Stirnseiten des rohrförmigen Gehäuses (2) ausgebildet sind.

7. Vorrichtung nach einem der voranstehenden Ansprüche, **dadurch gekennzeichnet, dass** das Gehäuse (2) rohrförmig ausgebildet ist.

8. Vorrichtung nach einem der voranstehenden Ansprüche, **dadurch gekennzeichnet, dass** die Deckel (14,15) gegeneinander verspannt sind.

9. Vorrichtung nach Anspruch 8, **dadurch gekennzeichnet, dass** die Verspannung durch nach Art von Dehnschrauben wirkende Spannschrauben oder Spannbolzen (30) gebildet ist.

10. Vorrichtung nach Anspruch 8, **dadurch gekennzeichnet, dass** die Einströmöffnung (21) in dem einen Deckel (14,15) und die Abströmöffnung (24) in dem anderen Deckel (14,15) eingeformt ist.

## Claims

1. A device for filtering fluids conveyed at high pressure with an inlet opening (21), an outlet opening (24) and a metal housing (2) enclosing a filter chamber (23) and having a service opening (3, 4) closed by means of a lid (14, 15), also of metal, which is seated by the action of a contact force on a rim portion (5, 6) surrounding the service opening (3, 4) in direct contact with the metal of the housing (2), the rim surface (7, 8) of the rim portion (5, 6) associated with the lid (14, 15) sloping between its inner boundary edge (10) that is associated with the service opening (3,4) and its outer boundary edge (12) such that the rim surface (7, 8) forms an angle (13) deviating from 90° with the adjacent inside surface (9) and outside surface (11) of the rim portion (5, 6) and the contact surface between the lid (14, 15) and the rim portion (5, 6) is limited to a fraction of the rim surface (7,8), and wherein there is arranged inside the filter chamber (23) a filter element (26) through which fluid flows on its way from the inlet opening (21) to the outlet opening (24).

2. A device according to claim 1, **characterised in that** the filter element is a filter body (26) which is seated on one of the walls that define the filter chamber (23) and through which the fluid can flow in the region of at least one of its peripheral surfaces.

3. A device according to claim 2, **characterised in that** the sealing surface (27) of the filter element (26) surrounds the outlet opening (24).

4. A device according to either claim 2 or claim 3, **characterised in that** the filter element (26) is biased by a resilient force acting from the filter chamber (23) on the sealing surface (27).

5. A device according to one of claims 2 to 4 **characterised in that** the filter element (26) is cylindrical in shape.

6. A device according to claim 5 **characterised in that** the service openings (3,4) are formed on the end faces of the tubular housing (2).

7. A device according to any one of the preceding claims, **characterised in that** the housing (2) is tubular.

8. A device according to any one of the preceding claims, **characterised in that** the lids (14, 15) are mutually tensioned.

9. A device according to claim 8 **characterised in that** the tensioning is obtained by tension screws or tension bolts (30) that act like expansion screws.

10. A device according to claim 8 **characterised in that** the inlet opening (21) is formed in one of the lids (14,15) and the outlet opening (24) is formed in the other of the lids (14, 15).

## Revendications

1. Dispositif de filtration de fluides alimentés sous haute pression, qui est équipé d'un orifice d'admission (21), d'un orifice d'expulsion (24) et d'un boîtier métallique (2) entourant l'espace de filtration (23), qui présente un orifice d'entretien (3, 4), qui est fermé par un couvercle (14, 15) également métallique, qui repose sous une force de pression sur un bord (5, 6) entourant l'orifice d'entretien (3, 4), en contact direct avec le métal du boîtier (2), où la surface de bord (7, 8) orienté vers le couvercle (14, 15) longe en oblique, le bord (5, 6) entre sa limite interne (10) orientée vers l'orifice d'entretien (3, 4) et sa limite externe (12), de sorte que la surface du bord (7, 8) avec la surface interne (9) voisine de celle-ci et la surface externe(11) du bord (5, 6), forme chaque fois un angle (13) s'écartant de 90° et la surface de contact entre le couvercle (14, 15) et la surface de bord (7, 8) est limitée et où dans l'espace de filtration (23), est agencé un élément de filtration (26), traversé par le fluide sur Sa voie depuis l'orifice d'admission (21) vers l'orifice d'expulsion (24).

2. Dispositif selon la revendication 1, **caractérisé en ce que** l'élément de filtration est formé comme un corps de filtre (26), qui s'appuie sur une des parois limitant l'espace de filtration (23) et peut être traversé par le fluide, au moins au niveau d'une de ses surfaces de périphérie.

3. Dispositif selon la revendication 2, **caractérisé en ce que** l' élément de filtration (26) entoure l'orifice d'expulsion (24) par sa surface étanche (27).

4. Dispositif selon la revendication 2 ou 3, **caractérisé en ce que** l'élément de filtration (26) est chargé d'une force élastique agissant sur la surface étanche (27) de l'espace de filtration (23).

5. Dispositif selon l'une des revendications 2 à 4, **caractérisé en ce que** l'élément de filtration (26) présente une forme cylindrique.

6. Dispositif selon la revendication 5, **caractérisé en ce que** les orifices d'entretien (3, 4) sont formés sur les faces frontales du boîtier tubulaire (2).

7. Dispositif selon l'une des revendications précédentes, **caractérisé en ce que** le boîtier est de forme tubulaire.

8. Dispositif selon l'une des revendications précédentes, **caractérisé en ce que** les couvercles (14, 15) sont tendus l'un par rapport à l'autre.

9. Dispositif selon la revendication 8, **caractérisé en ce que** la tension est formée par des vis de serrage ou des boulons de serrage (30) agissant selon le type de vis à allongement.

10. Dispositif selon la revendication 8, **caractérisé en ce que** l'orifice d'admission (21) est formé dans un des couvercles (14, 15) et l'orifice d'expulsion (24) est formé dans l'autre couvercle (14, 15) .
